(19) **Europäisches Patentamt / European Patent Office / Office européen des brevets**

(11) **EP 3 712 871 A1**

(12) **DEMANDE DE BREVET EUROPEEN**

(43) Date de publication:
**23.09.2020 Bulletin 2020/39**

(51) Int Cl.:
*G08G 1/01* (2006.01)    *G08G 1/04* (2006.01)
*G08G 1/048* (2006.01)    *G08G 1/16* (2006.01)

(21) Numéro de dépôt: **20164318.6**

(22) Date de dépôt: **19.03.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **21.03.2019 FR 1902943**

(71) Demandeur: **Transdev Group**
**92130 Issy les Moulineaux (FR)**

(72) Inventeurs:
• **KARAOGUZ, Cem**
**78280 Guyancourt (FR)**
• **BEAUVILLAIN, Alexis**
**91300 MASSY (FR)**

(74) Mandataire: **Lavoix**
**2, place d'Estienne d'Orves**
**75441 Paris Cedex 09 (FR)**

(54) **DISPOSITIF ÉLECTRONIQUE DE SÉLECTION AUTOMATIQUE D'UNE CONFIGURATION DE SURVEILLANCE D'UNE ZONE DE TRAFIC ROUTIER, PROCÉDÉ DE SÉLECTION ET PROGRAMME D'ORDINATEUR ASSOCIÉS**

(57)     L'invention concerne un dispositif (26) électronique de sélection automatique d'une configuration de surveillance d'une zone de trafic routier par capteur(s) parmi un ensemble de configurations d'au moins un capteur, l'ensemble comprenant au moins deux configurations distinctes, la zone de trafic routier étant segmentée en M régions distinctes avec M≥1, au moins une zone de couverture étant associée à chaque capteur ;
le dispositif comprenant :
- un module (28) de détermination configuré pour déterminer des intersections entre chaque région et chaque zone de couverture respectivement ;
- un module (30) de calcul d'optimisation configuré pour déterminer à partir desdites intersections, au moins une configuration de surveillance optimale correspondant à une configuration de capteur ou à une combinaison de configurations de capteurs fournissant au moins une couverture maximale.

FIG.2

**Description**

La présente invention concerne un dispositif électronique de sélection automatique d'une configuration de surveillance d'une zone de trafic routier par capteur(s) parmi un ensemble de configurations d'au moins un capteur, l'ensemble comprenant au moins deux configurations distinctes.

L'invention se rapporte également à un procédé de sélection, le procédé étant mis en œuvre par un tel dispositif électronique de sélection.

L'invention concerne également un programme d'ordinateur comportant des instructions logicielles qui, lorsqu'elles sont exécutées par un ordinateur, mettent en œuvre un tel procédé de sélection.

L'invention concerne le domaine du pilotage sécurisé de véhicules automobiles, et notamment le domaine du pilotage automatique des véhicules automobiles autonomes.

En effet, dans le domaine du pilotage sécurisé des véhicules automobiles, et notamment dans le pilotage autonome, un des problèmes principaux est l'identification anticipée d'obstacles sur le trajet d'un véhicule en mouvement, permettant de prendre des mesures correctrices pour que le véhicule ne percute pas ces obstacles.

Les obstacles considérés sont de tout type, par exemple des obstacles fixes, comme des rambardes de sécurité, des véhicules stationnés, ou des obstacles en mouvement, par exemple d'autres véhicules ou des piétons. On comprend qu'il est critique d'éviter toute collision entre un véhicule en mouvement et de tels obstacles.

On connait des systèmes d'assistance à la conduite automobile comprenant des dispositifs de communication aptes à identifier des obstacles dans une zone de circulation routière via des capteurs statiques (i.e. des capteurs immobiles qui ne sont pas embarqués à bord des véhicules automobiles autonomes mais installés à proximité d'une ou de plusieurs voies de circulation) et à en informer un équipement électronique à distance.

La configuration d'installation de ces capteurs statiques n'a été optimisée jusqu'ici qu'en considérant des capteurs de même technologie, par exemple des caméras. Toutefois, lorsque de nombreux obstacles se trouvent dans la zone où circule le véhicule autonome où lorsque des conditions de navigation telles que la nuit, la pluie, le vent, le froid voire le gel, la chaleur, etc. sont présentes, la surveillance de cette zone est limitée par les capacités de tels capteurs de même technologie.

Pour y remédier, il est généralement proposé d'enrichir un tel ensemble de capteurs de même technologie par un ou des capteurs de technologie distincte propre(s) à fournir des informations de surveillance complémentaires et/ou de consolidation.

Cependant jusqu'ici, l'optimisation de la configuration d'installation d'un ensemble de capteurs de technologies distinctes n'a pas été proposée et s'avère complexe à mettre en œuvre pour obtenir le meilleur compromis possible entre zone de couverture et coût d'installation.

Le but de l'invention est de remédier aux inconvénients de l'état de la technique en proposant un dispositif électronique de sélection automatique d'une configuration d'installation d'un ensemble de capteurs, efficace, générique et indépendant du nombre et/ou de la ou des technologies de capteurs à installer.

A cet effet, l'invention a pour objet un dispositif électronique de sélection automatique d'une configuration de surveillance d'une zone de trafic routier par capteur(s) parmi un ensemble de configurations d'au moins un capteur, l'ensemble comprenant au moins deux configurations distinctes, la zone de trafic routier étant segmentée en M régions distinctes avec M≥1, au moins une zone de couverture étant associée à chaque capteur,

le dispositif comprenant :

- un module de détermination configuré pour déterminer des intersections entre chaque région et chaque zone de couverture respectivement ;
- un module de calcul d'optimisation configuré pour déterminer à partir desdites intersections, au moins une configuration de surveillance optimale correspondant à une configuration de capteur ou à une combinaison de configurations de capteurs fournissant au moins une couverture maximale.

Ainsi avec le dispositif électronique de sélection selon l'invention, on obtient systématiquement et rapidement la configuration de surveillance fournissant une couverture maximale par rapport à l'ensemble de combinaisons et/ou de configuration(s) de capteurs possibles, et ce indépendamment de la technologie et ou du nombre de capteurs à disposition.

Le dispositif électronique de sélection selon l'invention est alors particulièrement avantageux pour configurer ou encore reconfigurer une zone de trafic routier notamment en cas de nouvelle technologie de capteur disponible ou de modification de la zone de trafic considérée par exemple par construction d'un bâtiment ajout/suppression d'un passage piéton ou d'un feu de signalisation ou tout autre élément propre à modifier la zone de couverture d'un ou de capteur(s) déjà installé(s) sur la zone considérée.

Suivant d'autres aspects avantageux de l'invention, le dispositif électronique de sélection comprend une ou plusieurs des caractéristiques suivantes, prises isolément ou suivant toutes les combinaisons techniquement possibles :

- le module de détermination est également configuré pour segmenter ladite zone de trafic routier en lesdites M régions distinctes et pour associer, à chaque région m, avec $1 \leq m \leq M$ de la pluralité de régions distinctes, un polygone de région et/ou un polyèdre de région comprenant K sommets distincts dont les coordonnées sont exprimées dans un référentiel de la zone de trafic routier à surveiller, et dans lequel le module de détermination est également configuré pour associer, à chaque zone de couverture, un polygone de zone de couverture et/ou un polyèdre de zone de couverture comprenant L sommets distincts dont les coordonnées sont exprimées dans le référentiel de la zone de trafic routier à surveiller ;
- le module de calcul d'optimisation est configuré pour également utiliser le nombre de capteurs formant chaque combinaison de capteur(s) possible pour déterminer la configuration de surveillance optimale ;
- le module de calcul d'optimisation est configuré pour également utiliser un coût associé à chaque capteur pour déterminer la configuration de surveillance optimale ;
- lequel le module de calcul d'optimisation est configuré pour comparer le coût de chaque combinaison de capteur(s) possible à une valeur de budget prédéfinie ;
- le module de détermination est également configuré pour associer, à chaque région de la pluralité de régions distinctes un facteur de pondération prédéterminé, et dans lequel le module de calcul d'optimisation est configuré pour également utiliser lesdits facteurs de pondération pour déterminer la configuration de surveillance optimale ;
- le module de détermination d'intersections est configuré pour filtrer les intersections obtenues en présence d'intersection(s) dont la surface, ou dont la surface pondérée, est inférieure à un seuil prédéterminé ;
- le dispositif comprend un module d'initialisation configuré pour initialiser au moins l'un des éléments appartenant au groupe comprenant :

  - la segmentation de la zone de trafic routier en M régions distinctes ;
  - des facteurs de pondération associés respectivement à chaque région ;
  - la zone de couverture associée à chaque ensemble de capteurs ;
  - la position et/ou l'orientation et/ou le champ de vision et/ou la technologie de chaque capteur ;
  - un seuil prédéterminé de filtrage d'intersection(s) ;
  - un coût associé à chaque capteur ;
  - une valeur de budget prédéfinie.

L'invention a également pour objet un procédé de sélection automatique d'une configuration de surveillance d'une zone de trafic routier par capteur(s) parmi un ensemble de configurations d'au moins un capteur, l'ensemble comprenant au moins deux configurations distinctes, la zone de trafic routier étant segmentée en M régions distinctes avec $M \geq 1$, au moins une zone de couverture étant associée à chaque capteur, le procédé étant mis en œuvre par un dispositif électronique de sélection, le procédé comprenant au moins:

- la détermination d'intersections entre chaque région et chaque zone de couverture respectivement ;
- à partir desdites intersections, le calcul d'optimisation de la configuration de surveillance optimale correspondant à une configuration de capteur ou à la combinaison de configurations de capteurs fournissant au moins une couverture maximale.

L'invention a également pour objet un programme d'ordinateur comportant des instructions logicielles qui, lorsqu'elles sont exécutées par un ordinateur, mettent en œuvre un procédé de sélection tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- [Fig 1] la figure 1 est une représentation schématique d'un exemple de zone de trafic routier dont la configuration de surveillance par capteur(s) est propre à être optimisée selon la présente invention ;
- [Fig 2] [Fig 3] [Fig 4] les figures 2 à 4 sont des représentations d'exemples de zone(s) de couverture(s) associée(s) à un ou des capteur(s) propre(s) à être installé(s) dans la zone de trafic routier de la figure 1 ;
- [Fig 5] la figure 5 est un organigramme d'un procédé de supervision selon l'invention.

Dans la suite de la description, l'expression « sensiblement égal(e) à » désigne une relation d'égalité à plus ou moins 10%, de préférence à plus ou moins 5%.

Par la suite, par « configuration de capteur » on entend le choix d'au moins un paramètre de capteur parmi les éléments appartenant au groupe comprenant :

- la position géographique d'installation du capteur,
- son orientation,

- sa technologie.

De plus, la « configuration de surveillance » au sens de la présente invention couvre à la fois le nombre de capteur(s) participant à la surveillance de la zone de trafic considérée ainsi que la configuration du ou des capteur(s) participant, telle que définie ci-dessus.

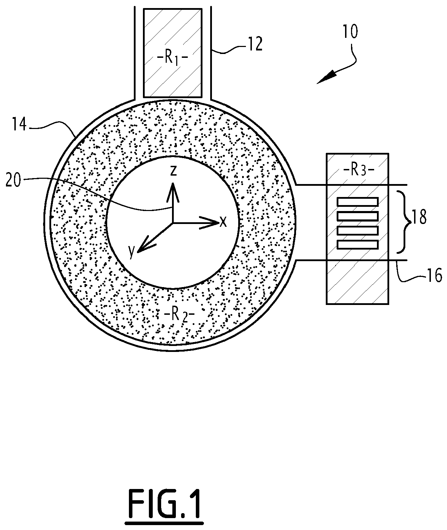

Sur la figure 1 est représenté un exemple de zone 10 de trafic routier dont la configuration de surveillance est propre à être optimisée selon la présente invention. La zone 10 comprend notamment une voie d'accès 12, un rond-point 14, une voie de sortie 16 sur laquelle est positionné un passage piéton 18.

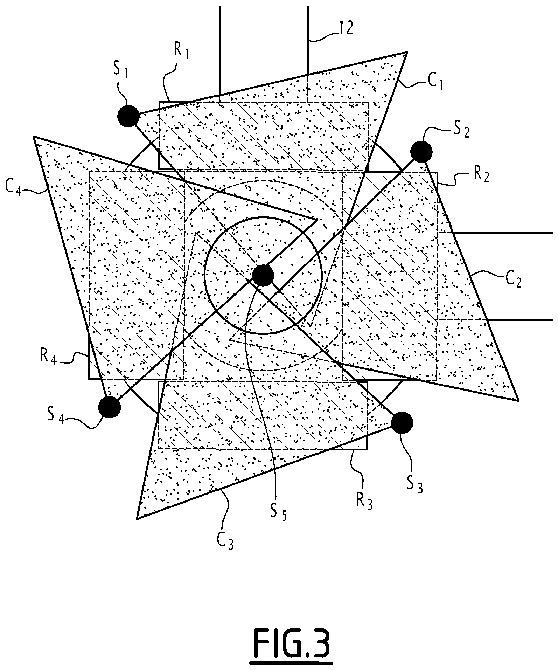

Une telle zone 10 est associée à une segmentation en M régions distinctes de surveillance, par exemple tel que représenté sur la figure 3, M=3 régions distinctes $R_1$, $R_2$, et $R_3$ correspondant respectivement à une région interne $R_1$ de la voie d'accès 12, une région interne $R_2$ du rond-point 14 et une région $R_3$ comprenant le passage piéton 18.

Un référentiel 20, par exemple le référentiel terrestre, ou encore le référentiel cartésien (X, Y, Z), est associé à la zone de trafic routier à surveiller.

En termes d'installation de nouveau(x) capteur(s) sur une zone de trafic routier telle que la zone 10 de la figure 1, des contraintes sont généralement à prendre en compte, telles que la réutilisation de capteur(s) statique(s) déjà installé(s) en voirie ou une implantation dans le sol spécifique pour l'installation d'un nouveau capteur de technologie donnée, ce qui limite le nombre de configurations de surveillance possibles, la position/orientation des capteurs déjà installés n'étant pas modifiable, et les implantations dans le sol limitant le nombre de positions géographiques possibles de même que l'orientation lorsque l'environnement d'installation comprend des obstructions potentielles du champ de vision du nouveau capteur.

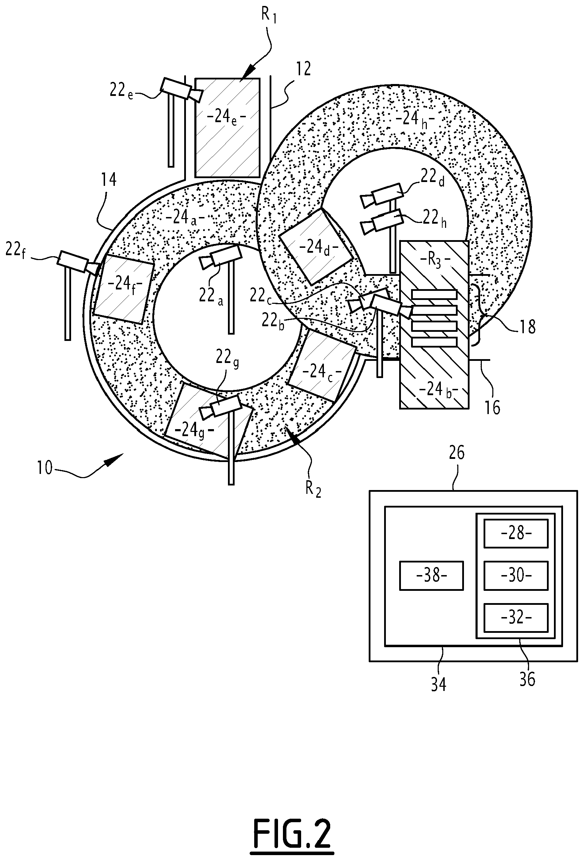

Sur la figure 2 est représentée, un exemple de configuration de surveillance possible basé sur une pluralité de capteurs $22_a$, $22_b$, $22_c$, $22_d$, $22_e$, $22_f$, $22_g$, $22_h$ installés en voirie sur la zone de la figure 1 précédemment décrite et respectivement leur zone de couverture associée à savoir $24_a$, $24_b$, $24_c$, $24_d$, $24_e$, $24_f$, $24_g$, $24_h$.

Il est à noter que selon la présente invention, selon la position d'installation et/ou l'orientation et/ou la technologie de capteur activée plusieurs zones de couverture distinctes (non représentées sur la figure 2 pour des raisons de clarté) pourraient être associées à un même capteur.

En d'autres termes, l'exemple de configuration de surveillance de la figure 2 est un exemple possible de configuration de surveillance parmi une pluralité de configurations de surveillance possibles mais limitées par les contraintes d'installation précédemment mentionnées.

Les capteurs statiques 22 présentent une technologie choisie parmi le groupe de technologie de capteur comprenant au moins : un lidar (de l'anglais *light detection and ranging*), un leddar (de l'anglais *light emitting diode detection and ranging)*, un radar (de l'anglais *radio detection and ranging*) un capteur à ultrasons, un capteur photo ou une caméra.

Par exemple, sur la figure 2, les capteurs $22_a$ et $22_h$ sont des lidars caractérisés par un champ de vision de 360° ce qui correspond à la représentation sous forme de cercle des zones de couverture associées $24_a$ et $24_h$. Les capteurs $22_b$, $22_c$, $22_d$, $22_e$, $22_f$, $22_g$ correspondent par exemple à des caméras dont le champ de vision présente un secteur angulaire propre à chaque caméra. Par exemple, les capteurs $22_b$, $22_c$ présente un champ de vision de 40° contre 60° associé au champ de vision des capteurs $22_d$, $22_e$.

La présente invention propose un dispositif électronique 26 de sélection automatique (i.e. sans intervention humaine) d'une configuration optimale de surveillance de la zone de trafic routier 10.

Pour ce faire, le dispositif électronique 26 comprend au moins un module 28 de détermination configuré pour déterminer des intersections entre chaque région et chaque zone de couverture respectivement, et un module 30 de calcul d'optimisation configuré pour déterminer à partir desdites intersections, au moins une configuration de surveillance optimale correspondant à une configuration de capteur ou à une combinaison de configurations de capteurs fournissant au moins une couverture maximale.

Un tel dispositif électronique 26 est par exemple localisé à distance dans une plateforme de supervision d'un réseau de transport (non représentée) ou encore au sein d'une collectivité de gestion de l'urbanisme et/ou de la voirie, un bureau d'étude, etc.

En complément facultatif, le module de détermination 28 est également configuré pour segmenter ladite zone de trafic routier en lesdites M régions distinctes. Pour ce faire, le module de détermination 28 comprend par exemple une interface de saisie manuelle (une souris, un pavé tactile, etc.) et un écran de restitution, de sorte à être propre à collecter et à traiter des informations de segmentation saisies par un utilisateur du dispositif électronique 26. Par exemple, l'utilisateur clique, au moyen de la souris, sur une carte, restituée par l'écran de restitution, pour définir les régions de la segmentation.

Autrement dit, la zone 10 de trafic routier à surveiller est selon la présente invention segmentée par le module de détermination 28 en un ensemble de région(s) (ou région(s) d'intérêt pour la surveillance) distinctes, et selon une variante particulière des régions disjointes (i.e. ne se chevauchant pas) :

$R = \{R_1, R_2, ..., R_m..., R_M\}$ où M est le nombre total de régions d'intérêt.

Par ailleurs, selon un aspect facultatif, le module de détermination 28 est également configuré pour associer, à chaque région *m,* avec $1 \leq m \leq M$ de la pluralité de régions distinctes, un polygone $R_m$ de région et/ou un polyèdre $R_m$ de région comprenant K sommets distincts dont les coordonnées (bidimensionnelles pour un polygone ou tridimensionnelles pour un polyèdre) sont exprimées dans le référentiel 20 de la zone 10 de trafic routier à surveiller avec

$$R_m = \{p_m^1, p_m^2, ..., p_m^K\}.$$

De plus, en complément facultatif, le module de détermination 28 est également configuré pour associer, à chaque zone de couverture n de chaque capteur (un même capteur pouvant être associée à plusieurs zones de couvertures distinctes en fonction de sa position d'installation et/ou de son orientation et/ou de sa technologie), un polygone $C_n$ de zone de couverture et/ou un polyèdre $C_n$ de zone de couverture comprenant L sommets distincts dont les coor-

$$C_n = \{p_n^1, p_n^2, ..., p_n^L\}.$$

données sont exprimées dans le référentiel 20 de la zone 10 de trafic routier à surveiller Pour déterminer des intersections entre chaque région et chaque zone de couverture respectivement, le module 28 de détermination est notamment propre à collecter l'ensemble C des N zones de couvertures possibles associées à l'ensemble de capteurs à disposition avec $C = \{C_1, C_2, ..., C_N\}$ et à définir à partir de celui-ci un autre ensemble V de configurations de surveillance individuelles tel que $V = \{V_1, V_2, ..., V_N\}$ avec : $V_n = \{v_{n,1}, v_{n,2}, ..., v_{n,M}\}$ où $v_{n,m} = f(C_n, R_m)$ est le résultat d'une fonction automatique de détermination d'intersection telle que par exemple décrite par B. Žalik, dans « Two efficient algorithms for determining intersection points between simple polygons ». Computers & Geosciences, 26(2), 137-151 (2000).

Une telle fonction est notamment propre à fournir automatiquement l'intersection entre deux polyèdres ou deux polygones, et est applicable ici au problème particulier selon l'invention de la détermination d'intersection entre zones de couverture et régions de trafic à surveiller.

En complément facultatif, le module de détermination 28 est également configuré pour associer, à chaque région *m* de la pluralité de régions distinctes un facteur $w_{n,m}$ de pondération. Pour intégrer cet aspect de pondération, l'ensemble d'intersection $V_n$ est redéfini de la manière suivante : $V_n = \{e_{n,1}, e_{n,2}, ..., e_{n,M}\}$ où chaque intersection pondérée $e_{n,m}$ est telle que $e_{n,m} = v_{n,m} w_{n,m}$.

Selon une variante particulière, le facteur de pondération est une fonction de la zone de couverture $C_n$ d'un capteur considéré et exprimé sous la forme $w_{n,m} = w_{R_m}(C_n)$, et l'intersection pondérée résultante obtenue est $e_{n,m} = v_{n,m} w_{R_m}(C_n)$

Selon une autre variante particulière, le facteur de pondération est une fonction de la surface de la région. Autrement dit, selon cette autre variante, chaque région $R_m$ est associée à son propre facteur de pondération qui est, par exemple, proportionnel à un degré d'importance prédéfini associé à la surface de la région $R_m$. Selon une autre variante particulière, le facteur de pondération est une fonction de la localisation de la région $R_m$. Par exemple, le facteur de pondération peut être proportionnel au risque d'accident associée. Ce risque peut être calculé à partir d'une base de données de l'accidentologie et la catégorisation de la région $R_m$.

Selon encore une autre variante, le facteur de pondération est à la fois fonction de la zone de couverture $C_n$ d'un capteur considéré et de la localisation de la région $R_m$ considérée et/ou de la surface de la région.

En effet, comme indiqué précédemment différentes technologies de capteurs sont propres à être utilisées pour déterminer, selon la présente invention une configuration de surveillance optimale. Un lidar est propre à délivrer avec précision (i.e. une erreur inférieure à un seuil d'erreur de 5% par exemple) la position et la vitesse des objets détectés mais n'est pas apte à classer de manière fiable les objets détectés en les associant par exemple à une catégorie piéton ou une catégorie véhicule, etc. Au contraire, à partir d'une caméra la position et/ou la vitesse d'un objet détecté sont obtenus avec moins de précision, en comparaison des résultats du lidar, mais la classification de l'objet détecté est plus fiable.

L'application d'une pondération permet de prendre en compte de telles performances pour optimiser la configuration de surveillance. Par exemple, dans la région interne $R_2$ du rond-point 14, il est préférable de privilégier l'obtention d'une précision de position et/ou de vitesse d'objet détecté à transférer par exemple à un véhicule autonome par rapport à la classification d'objet détecté, tandis que dans la région $R_3$ comprenant le passage piéton 18, la priorité porte sur la classification permettant d'évaluer si l'objet détecté sur le passage piéton est bien un piéton.

Pour la région $R_3$ comprenant le passage piéton 18, une telle priorité à la capacité de classification de l'objet par un capteur plutôt qu'à sa capacité de détermination de la position et/ou vitesse de l'objet est prise en compte selon la présente invention au moyen de l'application du facteur de pondération pré-mentionné, à savoir par exemple : $w_{R3}(24_b)$ = 1 si le capteur $22_b$ est apte à classifier les objets détectés, et sinon $w_{R3}(24_b) = 0$. Et pour la région interne $R_2$ du rond-point 14 :

$w_{R2}(24_a) = w_{R2}(24_c) = w_{R2}(24_d) = w_{R2}(24_f) = w_{R2}(24_g) = 1$ si les capteurs $22_a$, $22_c$, $22_d$, $22_f$, $22_g$ sont respectivement propres à localiser précisément l'objet détecté ou dans le cas contraire $w_{R2}(24_a) = w_{R2}(24_c) = w_{R2}(24_d) = w_{R2}(24_f) = w_{R2}(24_g) = 0$.

A titre d'alternative les valeurs des facteurs de pondération sont obtenues à partir d'un indice de performance déterminé à partir d'une étude formelle existante. En effet, différentes caméras sont propres à présenter des performances de détection différentes et en conséquence sont associées à des indices de performances différents.

Selon une autre alternative, la pondération est définie de manière arbitraire par un utilisateur en fonction des besoins de surveillance recherchés.

Par exemple, $w_{R_m}(C_n) = 0{,}5$ si le capteur associé à la zone de couverture $C_n$ est uniquement apte à classer les objets détectés, $w_{R_m}(C_n) = 0{,}5$ si le capteur associé à la zone de couverture $C_n$ est uniquement apte à localiser les objets détectés, $w_{R_m}(C_n) = 1$ si le capteur associé à la zone de couverture $C_n$ est à la fois apte à classer et localiser les objets détectés, et $w_{R_m}(C_n) = 0$ dans tous les autres cas.

Une telle option permet selon un autre exemple de privilégier la surveillance de certaines régions par rapport à d'autres pour renforcer particulièrement la sécurité au sein de ces zones. Par exemple, la zone $R_3$ associée au passage piéton 18 est associée à un facteur de pondération supérieur à celui associé aux zones $R_1$ et $R_2$.

En l'absence de pondération $w_{n,m} = 1$ quel que soit l'indice $n$ ou l'indice $m$.

En complément facultatif, le module de détermination d'intersections 28 est configuré pour filtrer les intersections obtenues en présence d'intersection(s) dont la surface, ou dont la surface pondérée, est inférieure à un seuil prédéterminé, telle que les intersections vides. Dans ce cas, les variables $e_{n,m}$ dont la valeur est inférieure au seuil sont mises à zéro.

A partir de l'ensemble $V_n$ ainsi filtré par le module de détermination 28, le module de calcul d'optimisation 30

$$o^* = \max_{o_q \in O} U(o_q)$$

est configuré pour définir un problème d'optimisation comme :                avec o* la configuration de surveillance optimale parmi Q configurations de surveillance possibles (indiquée chacune avec la variable $o_q$ avec $1 \leq q \leq Q$) d'un ensemble $O$ des Q configurations de surveillance possibles correspondant par exemple à toutes les combinaisons des configurations de surveillance individuelles $V_n \in V$ ou à certaines combinaisons des configurations de surveillance individuelles (obtenu après le filtrage mis en œuvre par le module de détermination 28. La fonction d'utilité $U(o_q)$ à maximiser est définie comme : $U(oq) = \alpha_{S_c}\overline{Sc(o_q)} + \alpha_{N_c}(1 - \overline{N_c(o_q)})$ où $\overline{S_c(o_q)}$ est le score normalisé de la configuration de surveillance $o_q$, $\overline{N_c(o_q)}$ est le nombre normalisé de capteurs utilisé dans la configuration de surveillance $o_q$, $\alpha_{S_c}$ et $\alpha_{N_c}$, dont la valeur est comprise entre 0 et 1, sont les poids d'importance de chaque aspect d'optimisation avec la contrainte $\sum_i^{\square} \alpha_i = 1$         Par exemple $\alpha_{S_C} = \alpha_{N_C} = 0{,}5$. Le score d'une configuration de surveillance $o_q$ est la somme des scores d'intersection pondérée de chaque capteur utilisé :

$$S_c(o_q) = \sum_{n \,\forall W_n \in o} \sum_{m=1}^{M} e_{n,m}$$

L'opération de normalisation est définie comme $\overline{d} = (d - d_{min})/(d_{max} - d_{min})$ où $d_{min}$ et $d_{max}$ sont les valeurs minimum et maximum possible pour variable $d$. Ici, les valeurs minimum et maximum de scores et nombres de capteurs dans l'ensemble O sont utilisés pour normaliser le score est nombre de capteurs d'une configuration de surveillance $o_q$.

Autrement dit, le module de calcul d'optimisation 30 est propre à résoudre automatiquement un problème d'optimisation en déterminant la combinaison de capteurs et la configuration de chacun de ces capteurs propre à délivrer une couverture maximale de la zone 10, le cas échéant en minimisant le nombre de capteurs utilisé lorsque $\alpha_N \neq 0$.

Selon un aspect particulier supplémentaire et facultatif de l'invention, le module 28 de détermination est propre à mettre en œuvre un filtrage supplémentaire, ou élimination de sous-ensemble(s), dans le cas où une région est couverte par plusieurs capteurs à la fois, seule l'intersection de surface maximum (i.e. de score maximal) étant retenue et les autres intersections rejetées.

Selon un autre aspect particulier facultatif, le module de calcul d'optimisation 30 est configuré pour également utiliser un coût associé à chaque capteur pour déterminer la configuration de surveillance optimale.

Selon un autre aspect particulier facultatif, le module de calcul d'optimisation 30 est configuré pour également comparer le coût de chaque combinaison de capteur(s) possible à une valeur de budget B prédéfinie.

Dans ce cas, les configurations de surveillance dont le coût dépasse le budget B sont exclues des solutions candidates dans la phase du filtrage. Le coût d'une configuration de surveillance est tout simplement la somme des coûts des capteurs utilisés dans cette configuration.

Selon un autre aspect les coûts des capteurs sont intégrés directement dans la fonction d'utilité :

$$U\left(o_q\right) = \alpha_{S_c}\overline{S_c(o_q)} + \alpha_P\left(1 - \overline{P\left(o_q\right)}\right)$$

où $\overline{P(o_q)}$ est le coût normalisé de la configuration de surveillance $o$ et $\alpha_P$ est le poids d'importance d'aspect de coût dans le problème d'optimisation. Comme la première version de la fonction d'utilité, les poids d'importance ont la contrainte $\sum_i^{\square} \alpha_i = 1$ . Cette deuxième fonction d'utilité cherche une configuration de surveillance qui maximise le score pour obtenir une couverture maximale et minimise le coût des capteurs utilisés.

Selon un autre aspect les coûts ainsi que le nombre de capteurs associé à chaque configuration de surveillance $o_q$ sont intégrés directement dans la fonction d'utilité :

$$U\left(o_q\right) = \alpha_{S_c}\overline{S(o_q)} + \alpha_{N_c}\left(1 - \overline{N_c(o_q)}\right) + \alpha_P\left(1 - \overline{P\left(o_q\right)}\right).$$

Comme les autres versions de la fonction d'utilité, les poids d'importance ont la contrainte $\sum_i^{\square} \alpha_i = 1$ . Cette troisième fonction d'utilité cherche une configuration de surveillance qui maximise le score pour obtenir une couverture maximale et minimise le nombre et coût des capteurs utilisés.

Selon d'autres exemples, la fonction d'utilité propre à être utilisée par le module de calcul d'optimisation 30 est propre à porter sur d'autres éléments (le nombre $N_r$ de régions couvertes, etc.).

En complément facultatif, le dispositif comprend un module d'initialisation 32 configuré pour initialiser au moins l'un des éléments appartenant au groupe comprenant :

- la segmentation de la zone de trafic routier en M régions distinctes ;
- des facteurs de pondération associés respectivement à chaque région ;
- la zone de couverture associée à chaque ensemble de capteurs ;
- la position et/ou l'orientation et/ou le champ de vision et/ou la technologie de chaque capteur ;
- un seuil prédéterminé de filtrage d'intersection(s) ;
- un coût associé à chaque capteur ;
- une valeur de budget prédéfinie
- un ou plusieurs critère(s) et/ou règles d'optimisation propres à être appliqués par le module de calcul d'optimisation 30.

Par exemple, un tel module d'initialisation est relié à un module de saisie manuelle des valeurs d'initialisation ou à un module de réception de ces valeurs transmises par un émetteur distant.

Dans l'exemple de la figure 2, le dispositif électronique 26 comprend une unité de traitement d'information 34 formée par exemple d'une mémoire 36 et d'un processeur 38 associé à la mémoire 36.

La mémoire 36 du dispositif 26 est alors apte à stocker un premier logiciel de détermination configuré pour déterminer des intersections entre chaque région et chaque zone de couverture respectivement, un deuxième logiciel de de calcul d'optimisation configuré pour déterminer à partir desdites intersections, au moins une configuration de surveillance optimale correspondant à une configuration de capteur ou à une combinaison de configurations de capteurs fournissant au moins une couverture maximale, et optionnellement un troisième logiciel d'initialisation configuré pour initialiser au moins l'un des éléments appartenant au groupe comprenant : la segmentation de la zone de trafic routier en M régions distinctes; des facteurs de pondération associés respectivement à chaque région ; la zone de couverture associée à chaque ensemble de capteurs ; un seuil prédéterminé de filtrage d'intersection(s) ; un coût associé à chaque capteur ; une valeur de budget prédéfinie.

Le processeur 38 est alors apte à exécuter chacun des logiciels parmi le premier logiciel de détermination, le deuxième logiciel de calcul d'optimisation, et optionnellement le troisième logiciel d'initialisation.

En variante non représentée, le module de détermination 28, le module de calcul d'optimisation 30, et optionnellement le module d'initialisation sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit*).

Lorsqu'une partie du dispositif électronique 26 est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

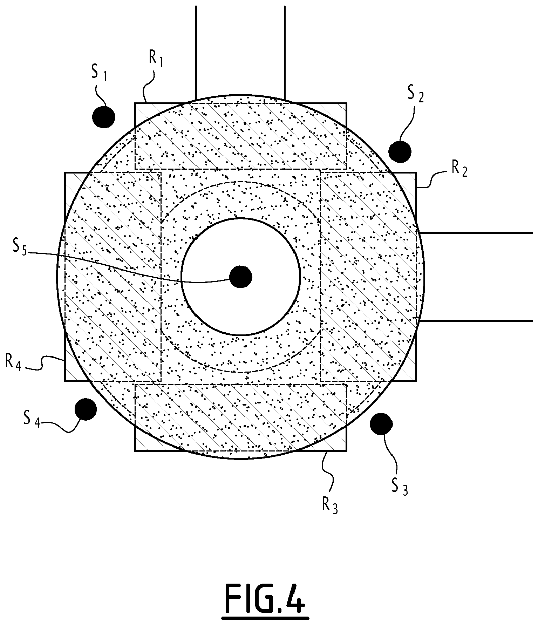

Les figures 3 et 4 sont des représentations d'autres exemples de zone(s) de couverture(s) associée(s) à un ou des capteur(s) propre(s) à être installé(s) en des positions différentes dans la zone de trafic routier 10 de la figure 1, à titre d'alternative de la configuration possible selon la figure 2.

Selon les figures 3 et 4, la segmentation de la zone de trafic routier 10 propre à être mise en œuvre, selon une option, par le module de détermination 28 comprend quatre régions rectangulaires $R_1$, $R_2$, $R_3$ et $R_4$ distinctes, qui préférentiellement ne se chevauchent pas, ou présentent un recouvrement maximal entre deux régions de l'ordre de 5% de leur surface respective

Pour surveiller au mieux ces quatre régions $R_1$, $R_2$, $R_3$ et $R_4$, l'ensemble des configurations possibles de surveillance obtenues à partir de cinq capteurs distincts à savoir $S_1$, $S_2$, $S_3$, $S_4$ et $S_5$ sont propres à être comparées automatiquement par le dispositif 26 selon la présente invention.

Sur la figure 3, la zone de couverture $C_1$, $C_2$, $C_3$, $C_4$, associée à la configuration de capteur (i.e. en fonction de sa position et de son orientation) de chacun des capteurs $S_1$, S2, $S_3$, $S_4$, qui permet de recouvrir au maximum une ou plusieurs des régions $R_1$, $R_2$, $R_3$ et $R_4$ de segmentation, est représentée. Par exemple, $C_1$, $C_2$, $C_3$ sont des caméras basiques d'un coût de 500€, tandis que la caméra $C_4$ est une caméra de gamme supérieure par rapport aux caméras $C_1$, $C_2$, $C_3$ et est par exemple, associée à un coût de 1000€.

La configuration de surveillance de la figure 3 est une configuration de surveillance possible parmi la pluralité de configurations de surveillance possibles associées à la mise en œuvre au maximum de cinq capteurs distincts. A titre d'alternative les capteurs $S_1$, $S_2$, $S_3$, $S_4$ localisés à l'extérieur du rond-point pourraient être de technologies différentes que des caméras à savoir par exemple un lidar, mais cette alternative est moins intéressante au vu des régions $R_1$, $R_2$, $R_3$ et $R_4$ car une partie du champ de vision de chaque lidar, celle ne « regardant » pas les régions $R_1$, $R_2$, $R_3$ et $R_4$, ne serait pas exploitée.

Sur la figure 4, la couverture $C_5$ associée au capteur S5 est représentée lorsque la configuration de ce capteur est telle qu'il présente la technologie d'un lidar associé, par exemple, à un coût de 2500€.

Le module 28 de détermination est propre à déterminer les intersections indiquées dans le premier tableau suivant :

| | | Régions | | | |
|---|---|---|---|---|---|
| | | $R_1$ | $R_2$ | $R_3$ | $R_4$ |
| Zones de couverture | $C_1$ | $v_{1.1}=0{,}95$ | $v_{1.2}=0$ | $v_{1.3}=0$ | $v_{1.4}=0$ |
| | $C_2$ | $v_{2.1}=0$ | $v_{2.2}=0{,}94$ | $v_{2.3}=0{,}02$ | $v_{2.4}=0$ |
| | $C_3$ | $v_{3.1}=0$ | $v_{3.2}=0$ | $v_{3.3}=0{,}96$ | $v_{3.4}=0{,}01$ |
| | $C_4$ | $v_{4.1}=0{,}02$ | $v_{4.2}=0$ | $v_{4.3}=0$ | $v_{4.4}=0{,}97$ |
| | $C_5$ | $v_{5.1}=0{,}99$ | $v_{5.2}=0{,}97$ | $v_{5.3}=0{,}98$ | $v_{5.4}=0{,}96$ |

En complément facultatif une pondération de chaque région est propre à être mise en œuvre par le module de détermination 28, puis utilisée par le module de calcul 30.

Par exemple, $w_m(C_n)=0{,}5$ si le capteur associé à la zone de couverture $C_n$ est uniquement apte à classer les objets détectés, $w_m(C_n)=0{,}5$ si le capteur associé à la zone de couverture $C_n$ est uniquement apte à localiser les objets détectés, $w_m(C_n)=1$ si le capteur associé à la zone de couverture $C_n$ est à la fois apte à classer et localiser les objets détectés, et $w_m(C_n)=0$ dans tous les autres cas.

Le module 28 de détermination est alors propre à déterminer les intersections pondérées telles qu'indiquées dans le deuxième tableau suivant :

| | | Régions pondérées | | | |
|---|---|---|---|---|---|
| | | $R_1$ | $R_2$ | $R_3$ | $R_4$ |
| Zones de couverture | $C_1$ | $e_{1.1}= w1(C_1)^*v_{1.1}=0,47$ | $e_{1.2}= w_2(C_1)^*v_{1.2}=0$ | $e_{1.3}= w_3(C_1)^*v_{1.3}=0$ | $e_{1.4}= w_4(C_1)^*v_{1.4}=0$ |
| | $C_2$ | $e_{2.1}= w_1(C_2)^*v_{2.1}=0$ | $e_{2.2}= w_2(C_2)^*v_{2.2}=0,47$ | $e_{2.3}= w_3(C_2)^*v_{2.3}=0.01$ | $e_{2.4}= w_4(C_2)^*v_{2.4}=0$ |
| | $C_3$ | $e_{3.1}= w_1(C_3)^*v_{3.1}=0$ | $e_{3.2}= w_2(C_3)^*v_{3.2}=0$ | $e_{3.3}= w_3(C_3)^*v_{3.3}=0,48$ | $e3,4= w_4(C_3)^*v_{3.4}=0$ |
| | $C_4$ | $e_{4.1}= w_1(C_4)^*v_{4.1}=0,02$ | $e_{4.2}= w_2(C_4)^*v_{4.2}=0$ | $e_{4.3}= w_3(C_4)^*v_{4.3}=0$ | $e_{4.4}= w_4(C_4)^*v_{4.4}=0,97$ |
| | $C_5$ | $e_{5.1}= w_1(C_5)^*v_{5.1}=0,49$ | $e_{5.2}= w_2(C_5)^*v_{5.2}=0,48$ | $e_{5.3}= w_3(C_5)^*v_{5.3}=0,49$ | $e_{5.4}= w_4(C_4)^*v_{5.4}=0,96$ |

Selon une option, le module 28 de détermination est propre à filtrer les intersections, le cas échéant telles que pondérées ci-dessus, tel qu'indiqué dans le troisième tableau suivant en les filtrant (i.e. en les supprimant tel que barré dans le tableau ci-dessous) lorsque la surface d'intersection est inférieure à un seuil prédéterminé, par exemple 10% (i.e. 0,1) de la surface de la région considérée :

| | | Régions pondérées | | | |
|---|---|---|---|---|---|
| | | $R_1$ | $R_2$ | $R_3$ | $R_4$ |
| Zones de couverture | $C_1$ | $e_{1,1}= w1(C_1)^*v_{1,1}=0,47$ | | | |
| | $C_2$ | | $e_{2,2}= w_2(C_2)^*v_{2,2}=0,47$ | | |
| | $C_3$ | | | $e_{3,3}= w_3(C_3)^*v_{3,3}=0,48$ | |
| | $C_4$ | | | | $e_{4,4}= w_4(C_4)^*v_{4,4}=0,97$ |
| | $C_5$ | $e_{5,1}= w_1(C_5)^*v_{5,1}=0,49$ | $e_{5,2}= w_2(C_5)^*v_{5,2}=0,48$ | $e_{5,3}= w_3(C_5)^*v_{5,3}=0,49$ | $e_{5,4}= w_4(C_4)^*v_{5,4}=0,96$ |

L'ensemble final V résultant revient à V= $\{V_1, V_2, V_3, V_4, V_5\}$ avec : $V_1=\{e_{1,1}\}$, $V_2=\{e_{2,2}\}$, $V_3=\{e_{3,3}\}$, $V_4=\{e_{4,4}\}$, $V_5=\{e_{5,1}, e_{5,2}, e_{5,3}, e_{5,4}\}$.

A partir de cet ensemble V final reçu en entrée, comme indiqué précédemment, le module de calcul 30 selon l'invention met en œuvre un algorithme d'optimisation propre à déterminer un score de couverture associé à chaque configuration candidate $o_q$ correspondant à chaque combinaison possible des sous-ensembles de V parmi trente et une combinaisons possibles obtenues et testées automatiquement (i.e. sans intervention humaine) correspondant à cinq combinaisons de un élément de V parmi cinq, dix combinaisons de deux éléments de V parmi cinq, dix combinaisons de trois éléments parmi cinq, cinq combinaisons de quatre éléments parmi cinq et une combinaison de cinq éléments parmi cinq et à sélectionner la configuration candidate optimale $o^*$ en fonction de critère(s) d'optimisation prédéterminé(s) ou reconfigurable(s) via le module d'initialisation 32.

Selon un aspect particulier supplémentaire et facultatif de l'invention, le module 28 de détermination est propre à mettre en œuvre un filtrage supplémentaire, ou élimination de sous-ensemble(s), dans le cas où une région est couverte par plusieurs capteurs à la fois, seule l'intersection de surface maximum (i.e. de score maximal) étant retenue et les autres intersections rejetées. Par exemple, dans le cas d'une première configuration candidate correspondant à l'ensemble $\{V_1, V_2, V_3, V_4, V_5\}$, $v_{1,1}$ et $v_{5,1}$ se chevauchent et $v_{1,1}= 0,95 < v_{5,1}= 0,99$ si bien que $v_{1,1}$ est ignoré et en conséquence l'ensemble $V_1$ dans son intégralité. Il est en de même pour $V_2$ et $V_3$ et $v_{5,4}= 0,96 < v_{4,4}= 0,97$ en conséquence la première configuration candidate est réduite à $\{V_4, V'_5\}$ avec $V'_5=\{v_{5,1}, v_{5,2}, v_{5,3}\}$. Cette capacité facultative d'élimination du module 28 de détermination permet alors potentiellement de réduire le nombre de combinaisons à traiter par le module de calcul 30 d'optimisation et donc d'en accélérer le temps de calcul.

En relation avec l'exemple des figures 3 et 4, parmi les 31 configurations candidates possible et après élimination, le module de calcul d'optimisation 30 est propre à déterminer les configurations candidates les plus pertinentes du cinquième tableau suivant dans lequel à chaque configuration candidate $o_q$ est associée le score de couverture $S_c$, le nombre de région(s) couverte(s) $N_r$, le coût P, le nombre de capteurs $N_c$ mis en œuvre dans la configuration candidate, un identifiant de la configuration candidate.

| Configuration candidate $o_q$ | $\underline{S_c}$ | $\underline{N_r}$ | P | $\underline{N_c}$ | |
|---|---|---|---|---|---|
| $V_1+V_2+V_3$ | 0,47+0,47+0,48=1,42 | 3 | 1500 | 3 | 1 |
| $V_1+V_2+V_3+V_4$ | 2,39 | 4 | 2500 | 4 | 2 |
| $V_5$ | 1,94 | 4 | 2500 | 1 | 3 |
| $V_4+V_5$ | 2,43 | 4 | 3000 | 2 | 4 |

Le module de calcul 30 d'optimisation est propre à mettre en œuvre une fonction d'utilité U(c) pour exprimer le problème d'optimisation de la surveillance d'une zone de trafic routier selon a présente invention et déterminer la configuration optimale en fonction de critère(s) d'optimisation prédéterminé(s) ou reconfigurable(s).

Par exemple, une première fonction d'utilité possible est exprimée sous la forme $U_1(o_q) = \alpha_{S_c}\overline{S_c(o_q)} + \alpha_{N_c}(1 - \overline{N_c(oq)})$ avec $\overline{S_c(o_q)}$ le score normalisé (i.e. dont la valeur est comprise entre 0 et 1 par normalisation du score après obtention de tous les scores de chaque configuration candidate et utilisation du score maximal $S_{cmax}$ et du score minimal

$$\overline{S_c(o_q)} = \left(\frac{S_c(o_q) - S_{cmin}}{S_{cmax} - S_{cmin}}\right)), \quad \overline{N_c(o_q)}$$

$S_{cmin}$ tel que,. la valeur normalisée du nombre de capteur(s) utilisé(s) dans la configuration candidate $o_q$ considérée, $\alpha_{S_c}$ et $\alpha_{N_c}$ des critères d'optimisation correspondant à des poids en fonction des besoins d'optimisation recherchés de sorte que $\alpha_{S_c} + \alpha_{N_c} = 1$. Ainsi, si $\alpha_{S_c} = 0$ et $\alpha_{N_c} = 1$, le problème d'optimisation vise uniquement à, par exemple limiter le nombre de capteurs à installer. Si, au contraire, si $\alpha_{N_c} = 0$ et $\alpha_{S_c} = 1$ alors le problème d'optimisation vise à obtenir la couverture maximale (i.e. le score maximal), des valeurs strictement comprises entre 0 et 1 de $\alpha_{S_c}$ et $\alpha_{N_c}$ sont des critères d'optimisation indiquant que l'optimisation doit à la fois porter sur la couverture et le nombre de capteurs.

Une deuxième fonction d'utilité possible est exprimée sous la forme :

$$U_2(o_q) = \alpha_{S_c}\overline{S_c(o_q)} + \alpha_P(1 - \overline{P(o_q)})$$

avec $\overline{P(oq)}$ le coût normalisé et $\alpha_P$ le poids associé tel que $\alpha_{S_c} + \alpha_P = 1$. Une telle deuxième fonction permet de faire porter le problème d'optimisation sur la couverture maximale et/ou le coût d'installation.

Une troisième fonction d'utilité possible est exprimée sous la forme :

$$U_3(o_q) = \alpha_{S_c}\overline{S_c(o_q)} + \alpha_{N_c}(1 - \overline{N_c(o_q)}) + \alpha_P(1 - \overline{P(o_q)})$$

avec $\alpha_{S_c} + \alpha_{N_c} + \alpha_P = 1$. Une telle troisième fonction permet de faire porter le problème d'optimisation à la fois sur la couverture maximale et/ou le coût d'installation et/ou le nombre de capteurs.

Selon d'autres exemples, la fonction d'utilité propre à être utilisée par le module de calcul d'optimisation 30 est propre à porter sur le nombre de régions couvertes $N_r$, etc.

A partir d'une telle fonction d'utilité, selon l'un des exemples précités, le module de calcul d'optimisation 30 est propre à définir le but d'optimisation en fonction de règles d'optimisation prédéterminée(s) ou reconfigurable(s) via le module d'initialisation 32.

De telles règles sont notamment associées aux valeurs de poids utilisées.

Par exemple, si $\alpha_{S_c} = 1$, le problème d'optimisation se résume à un problème de couverture maximale alors la règle correspondante vise à trouver la configuration optimale o* qui garantit la valeur maximale de la fonction d'utilité :

$$o^* = \max_{o_q \in O} U(o_q)$$

ce qui correspond à la configuration candidate d'identifiant 4 correspondant à la combinaison des capteurs $S_4$ et $S_5$ associée au score maximal 2,43.

Si $\alpha_{N_c} = 1$, le problème d'optimisation se résume à un problème de limitation du nombre de capteur alors la règle correspondante vise à trouver la configuration optimale o* qui garantit la valeur maximale de la fonction d'utilité :

$$o^* = \max_{o_q \in O} U(o_q)$$

ce qui correspond à la valeur minimale du nombre de capteurs ce qui correspond notamment à la configuration candidate d'identifiant 3 correspondant au seul capteur $S_5$ lorsque l'étape facultative d'élimination a été mise en œuvre. En l'absence de l'application de cette étape d'élimination plusieurs autres solutions optimales mettant en œuvre un seul capteur résulteraient de la résolution du problème d'optimisation.

Si $\alpha_P = 1$, le problème d'optimisation se résume à un problème de coût, et selon une première règle correspondante vise à trouver la configuration optimale o* qui garantit la valeur maximale de la fonction d'utilité

$$o^* = \max_{o_q \in O} U(o_q)$$

ce qui correspond à la valeur minimale de coût et en conséquence, lorsque l'étape facultative d'élimination a été mise en œuvre, à la configuration candidate d'identifiant 1 correspondant à la combinaison de capteurs $S_1$, $S_2$, et $S_3$ dont le coût est de 1500€ (en l'absence de l'application de cette étape d'élimination plusieurs autres solutions optimales mettant en œuvre un seul capteur correspondant à une seule caméra dont le coût est de 500€ résulteraient de la résolution du problème d'optimisation,) ou selon une deuxième règle correspondante soumet la fonction $U(o_q)$ à un budget B, par exemple B=3000€, par exemple en cherchant la combinaison o* telle que $U(o_q) > 3000€$ à savoir, lorsque l'étape facultative d'élimination a été mise en œuvre, la configuration candidate d'identifiant 4 correspondant à la combinaison des capteurs $S_4$ et $S_5$.

Si $\alpha_{S_c} = \alpha_P = 0,5$, le problème d'optimisation a pour but de déterminer la configuration candidate optimale qui permettent d'adresser à la fois la règle d'optimisation concernant la couverture et le coût, à savoir, par exemple, la configuration candidate d'identifiant 2 correspondant à la combinaison des capteurs $S_1$, $S_2$, $S_3$ et $S_4$ qui permet d'obtenir un score de couverture de 2,39 tout en ayant un coût modéré.

Pour résoudre le problème d'optimisation des fonctions d'utilités précitées, le module de calcul d'optimisation 30 est propre à utiliser tout algorithme d'optimisation qui permet d'atteindre le but recherché spécifiquement selon la présente invention, par exemple un algorithme d'optimisation glouton.

L'homme du métier comprendra que les exemples illustratifs utilisés en relation avec les figures 3 et 4 se veulent relativement simples pour des raisons de clarté, mais que le dispositif selon la présente invention est propre à résoudre des problèmes d'optimisation plus complexe tenant compte d'un nombre de configurations possibles et de capteurs plus important que ceux utilisés en relation avec les figures 2 à 4, de sorte à déterminer une configuration de surveillance optimale au vu d'une pluralité de combinaisons possibles de capteur(s) et de leur configuration propre (en position orientation type de technologie) qui serait impossible à déterminer de manière fiable et dans un temps prédéfini par l'usage exclusif d'une activité mentale.

Il est à noter que l'exemple de zone 10 de trafic routier des figures 1 à 4 n'est pas limitative et que la présente invention est applicable pour l'optimisation de la surveillance d'autres types de zone de trafic routier, notamment propre à être parcourue par un véhicule autonome, telle qu'une zone de circulation comprenant une intersection, une zone de circulation comprenant des feux de signalisation, une zone de circulation comprenant un passage à niveaux, une zone de circulation comprenant un échangeur routier, ou tout autre type de zone de trafic routier requérant la mise en place d'une surveillance pour en augmenter la sécurité.

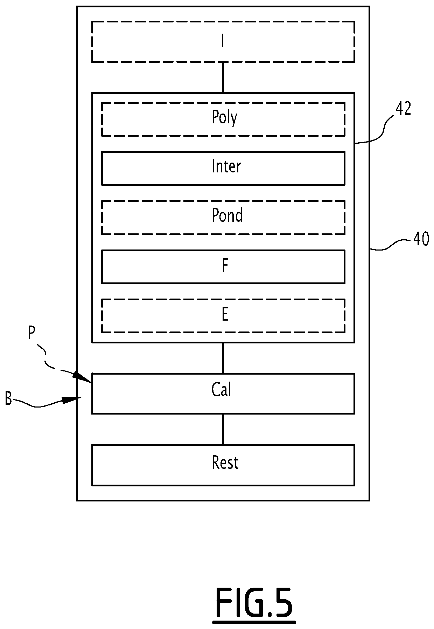

Le fonctionnement du dispositif électronique de sélection automatique d'une configuration de surveillance va désormais être expliqué à l'aide de la figure 5 représentant un organigramme du procédé 40 selon l'invention de sélection automatique d'une configuration de surveillance d'une zone de trafic routier par capteur(s) parmi un ensemble de configurations d'au moins un capteur, l'ensemble comprenant au moins deux configurations distinctes, la zone de trafic routier étant segmentée en M régions distinctes avec M≥1, au moins une zone de couverture étant associée à chaque capteur, le procédé 40 étant mis en œuvre par le dispositif électronique de sélection 26.

Lors d'une étape facultative initiale I, le dispositif électronique de sélection 26 initialise, via le module d'initialisation 32 au moins l'un des éléments appartenant au groupe comprenant :

- la segmentation de la zone de trafic routier en M régions distinctes ;

- des facteurs de pondération associés respectivement à chaque région ;
- la zone de couverture associée à chaque ensemble de capteurs ;
- la position et/ou l'orientation et/ou le champ de vision et/ou la technologie de chaque capteur ;
- un seuil prédéterminé de filtrage d'intersection(s) ;
- un coût associé à chaque capteur ;
- une valeur de budget prédéfinie.

Lors d'une étape suivante 42, le dispositif 26 procède, via son module de détermination 28 à la construction d'ensemble(s) d'intersections entre chaque région de la zone de trafic routier segmentée et chaque zone de couverture associée à une configuration donnée de capteur.

Une telle étape 42 est propre à comprendre de manière facultative des sous-étapes, telle que la sous-étape Poly au cours de laquelle le module de détermination 28 est propre à segmenter ladite zone de trafic routier en lesdites M régions distinctes, à associer, à chaque région m, avec $1 \leq m \leq M$ de la pluralité de régions distinctes, un polygone $R_m$ de région et/ou un polyèdre $R_m$ de région comprenant K sommets distincts dont les coordonnées sont exprimées dans un référentiel de la zone de trafic routier à surveiller, et à associer, à chaque zone de couverture, un polygone $C_n$ de zone de couverture et/ou un polyèdre $C_n$ de zone de couverture comprenant L sommets distincts dont les coordonnées sont exprimées dans le référentiel de la zone de trafic routier à surveiller.

La sous-étape Poly est alors suivie de la sous-étape Inter où à partir des polygones et/ou polyèdres respectivement associés aux régions et aux zones de couverture les intersections sont obtenues.

Puis, selon une autre sous-étape intermédiaire facultative Pond, un facteur de pondération est associé à chaque région de la zone de trafic routier à surveiller.

Selon un aspect particulier, une autre étape facultative F succède à l'étape facultative Pond, à savoir un filtrage propre à ignorer les intersections dont la surface, ou la surface pondérée est inférieure à un seuil prédéterminé.

Selon un autre aspect optionnel, une autre étape E succède à l'étape facultative F et consiste en une élimination de sous-ensemble(s), dans le cas où une région est couverte par plusieurs capteurs à la fois, seule l'intersection de surface maximum étant retenue et les autres intersections rejetées.

Puis une étape Cal est mise en œuvre via le module 30 de calcul d'optimisation du dispositif 26 pour fournir la configuration de surveillance optimale correspondant à une configuration de capteur ou à une combinaison de configurations de capteurs fournissant au moins une couverture maximale.

Une telle étape Cal est propre à prendre en compte le coût $C_O$ de chaque capteur intervenant dans la configuration candidate considérée, et le cas échéant un budget B pour résoudre un problème de couverture maximale soumise à un budget.

Enfin une étape Rest de restitution est mise en œuvre pour fournir la configuration de surveillance résultante à un opérateur, par exemple par affichage visuel ou encore par restitution sonore.

Ainsi, le dispositif électronique de sélection selon a présente invention est propre à fournir une configuration de surveillance optimale quelle que soit la complexité d'optimisation associée au nombre de combinaisons possibles de configuration de capteur(s) à étudier.

En complément lorsqu'un budget d'installation de la configuration doit être respecté, le problème d'optimisation résolu selon la présente invention est propre à être adapté pour respecter ledit budget tout en maximisant la couverture de surveillance obtenue.

On conçoit ainsi que le dispositif de sélection selon l'invention participe à offrir une surveillance plus efficace de la scène autour d'un véhicule automobile, notamment autour d'un véhicule automobile autonome.

**Revendications**

1. Dispositif (26) électronique de sélection automatique d'une configuration de surveillance d'une zone de trafic routier par capteur(s) parmi un ensemble de configurations d'au moins un capteur, l'ensemble comprenant au moins deux configurations distinctes, la zone de trafic routier étant segmentée en M régions distinctes avec $M \geq 1$, au moins une zone de couverture étant associée à chaque capteur ;
le dispositif comprenant :

   - un module (28) de détermination configuré pour déterminer des intersections entre chaque région et chaque zone de couverture respectivement ;
   - un module (30) de calcul d'optimisation configuré pour déterminer à partir desdites intersections, au moins une configuration de surveillance optimale correspondant à une configuration de capteur ou à une combinaison de configurations de capteurs fournissant au moins une couverture maximale.

**2.** Dispositif (26) selon la revendication 1, dans lequel le module (28) de détermination est également configuré pour segmenter ladite zone de trafic routier en lesdites M régions distinctes et pour associer, à chaque région m, avec $1 \leq m \leq M$ de la pluralité de régions distinctes, un polygone ($R_m$) de région et/ou un polyèdre ($R_m$) de région comprenant K sommets distincts dont les coordonnées sont exprimées dans un référentiel de la zone de trafic routier à surveiller, et dans lequel le module de détermination est également configuré pour associer, à chaque zone de couverture, un polygone ($C_n$) de zone de couverture et/ou un polyèdre ($C_n$) de zone de couverture comprenant L sommets distincts dont les coordonnées sont exprimées dans le référentiel de la zone de trafic routier à surveiller.

**3.** Dispositif (26) selon la revendication 1 ou 2, dans lequel le module (30) de calcul d'optimisation est configuré pour également utiliser le nombre de capteurs formant chaque combinaison de capteur(s) possible pour déterminer la configuration de surveillance optimale.

**4.** Dispositif (26) selon l'une quelconque des revendications précédentes, dans lequel le module de calcul (30) d'optimisation est configuré pour également utiliser un coût associé à chaque capteur pour déterminer la configuration de surveillance optimale.

**5.** Dispositif (26) selon la revendication 4, dans lequel le module de calcul (30) d'optimisation est configuré pour comparer le coût de chaque combinaison de capteur(s) possible à une valeur de budget prédéfinie.

**6.** Dispositif (26) selon l'une quelconque des revendications précédentes, dans lequel le module de détermination (28) est également configuré pour associer, à chaque région de la pluralité de régions distinctes un facteur de pondération prédéterminé, et dans lequel le module (30) de calcul d'optimisation est configuré pour également utiliser lesdits facteurs de pondération pour déterminer la configuration de surveillance optimale.

**7.** Dispositif (26) selon l'une quelconque des revendications précédentes, dans lequel le module de détermination (28) d'intersections est configuré pour filtrer les intersections obtenues en présence d'intersection(s) dont la surface, ou dont la surface pondérée, est inférieure à un seuil prédéterminé.

**8.** Dispositif (26) selon l'une quelconque des revendications précédentes, dans lequel le dispositif comprend un module d'initialisation (32) configuré pour initialiser au moins l'un des éléments appartenant au groupe comprenant :

- la segmentation de la zone de trafic routier en M régions distinctes ;
- des facteurs de pondération associés respectivement à chaque région ;
- la zone de couverture associée à chaque ensemble de capteurs ;
- la position et/ou l'orientation et/ou le champ de vision et/ou la technologie de chaque capteur ;
- un seuil prédéterminé de filtrage d'intersection(s) ;
- un coût associé à chaque capteur ;
- une valeur de budget prédéfinie.

**9.** Procédé (40) de sélection automatique d'une configuration de surveillance d'une zone de trafic routier par capteur(s) parmi un ensemble de configurations d'au moins un capteur, l'ensemble comprenant au moins deux configurations distinctes, la zone de trafic routier étant segmentée en M régions distinctes avec $M \geq 1$, au moins une zone de couverture étant associée à chaque capteur, le procédé étant mis en œuvre par un dispositif électronique de sélection, le procédé comprenant au moins :

- la détermination (42) d'intersections entre chaque région et chaque zone de couverture respectivement ;
- à partir desdites intersections, le calcul d'optimisation (Cal) de la configuration de surveillance optimale correspondant à une configuration de capteur ou à la combinaison de configurations de capteurs fournissant au moins une couverture maximale.

**10.** Programme d'ordinateur comportant des instructions logicielles qui, lorsqu'elles sont exécutées par un ordinateur, mettent en œuvre un procédé de sélection selon la revendication 9.

## FIG.1

## FIG.2

# FIG.3

FIG.4

FIG.5

Europäisches
Patentamt

European
Patent Office

Office européen
des brevets

**RAPPORT DE RECHERCHE EUROPEENNE**

Numéro de la demande

EP 20 16 4318

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2018/011511 A1 (ROCKWELL COLLINS FRANCE [FR]) 18 janvier 2018 (2018-01-18) * abrégé * * page 6, ligne 22 - page 7, ligne 25 * * page 12, ligne 22 - page 13, ligne 3 * ----- | 1-10 | INV. G08G1/01 G08G1/04 G08G1/048 G08G1/16 |
| X | CN 105 702 030 B (XI'AN JIAOTONG UNIV) 17 juillet 2018 (2018-07-17) * le document en entier * * abrégé * | 1-10 | |
| X | ----- WO 2012/015156 A2 (ECM ASIA ITS CO LTD [KR]; LEE JAE-MYUNG [KR]) 2 février 2012 (2012-02-02) * le document en entier * * abrégé * ----- | 1-10 | |

| | DOMAINES TECHNIQUES RECHERCHES (IPC) |
|---|---|
| | G08G |

Le présent rapport a été établi pour toutes les revendications

| Lieu de la recherche | Date d'achèvement de la recherche | Examinateur |
|---|---|---|
| La Haye | 13 août 2020 | Thareau-Berthet, N |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 16 4318

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-08-2020

| Document brevet cité au rapport de recherche | | | Date de publication | Membre(s) de la famille de brevet(s) | | | Date de publication |
|---|---|---|---|---|---|---|---|
| WO | 2018011511 | A1 | 18-01-2018 | EP | 3485292 | A1 | 22-05-2019 |
| | | | | FR | 3054042 | A1 | 19-01-2018 |
| | | | | US | 2019293775 | A1 | 26-09-2019 |
| | | | | WO | 2018011511 | A1 | 18-01-2018 |
| CN | 105702030 | B | 17-07-2018 | AUCUN | | | |
| WO | 2012015156 | A2 | 02-02-2012 | KR | 101032098 | B1 | 02-05-2011 |
| | | | | WO | 2012015156 | A2 | 02-02-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Littérature non-brevet citée dans la description**

- Two efficient algorithms for determining intersection points between simple polygons. *Computers & Geosciences,* 2000, vol. 26 (2), 137-151